(19) **Europäisches Patentamt / European Patent Office / Office européen des brevets**

(11) **EP 4 653 481 A1**

(12) **EUROPEAN PATENT APPLICATION**

(43) Date of publication:
26.11.2025 Bulletin 2025/48

(21) Application number: 25176692.9

(22) Date of filing: 15.05.2025

(51) International Patent Classification (IPC):
C08G 18/09 (2006.01)          C08G 18/10 (2006.01)
C08G 18/18 (2006.01)          C08G 18/22 (2006.01)
C08G 18/28 (2006.01)          C08G 18/42 (2006.01)
C08G 18/73 (2006.01)          C08G 18/78 (2006.01)
C08G 18/79 (2006.01)          C09D 175/04 (2006.01)
C09D 175/06 (2006.01)

(52) Cooperative Patent Classification (CPC):
(C-Sets available)
C08G 18/283; C08G 18/092; C08G 18/10;
C08G 18/1875; C08G 18/222; C08G 18/2825;
C08G 18/4277; C08G 18/73; C08G 18/7837;
C08G 18/792; C09D 175/04; C09D 175/06;
C08G 2150/90; C08G 2230/00          (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.05.2024 JP 2024082465

(71) Applicant: Asahi Kasei Kabushiki Kaisha
Tokyo 1000006 (JP)

(72) Inventors:
• SAEDA, Kirara
Tokyo, 100-0006 (JP)
• TAKEI, Akira
Tokyo, 100-0006 (JP)
• ONO, Asami
Tokyo, 100-0006 (JP)
• HIGASHI, Masatsugu
Tokyo, 100-0006 (JP)

(74) Representative: Strehl & Partner mbB
Maximilianstrasse 54
80538 München (DE)

(54) **POLYISOCYANATE COMPOSITION, MIXTURE, COATING COMPOSITION, AND COATING FILM**

(57) The present invention provides a polyisocyanate composition comprising a polyisocyanate having an allophanate group, wherein the polyisocyanate is derived from (A), (C), and (D), said (A) is at least one diisocyanate selected from the group consisting of aliphatic diisocyanates and alicyclic diisocyanates, said (C) is a polyester polyol or a polycaprolactone polyol, has a number-average molecular weight (Mn) of 500 or more and 4,000 or less, and is bifunctional or trifunctional, said (D) is a hydrophilic component, an average isocyanate functionality of the polyisocyanate composition is 1.8 or more and 3.2 or less, the polyester polyol is composed of a polyol unit and a dicarboxylic acid unit that has 8 or fewer carbon atoms, a content of said (C) relative to a total mass of the polyisocyanate composition is more than 50% by mass and 85% by mass or less, and a content of said (D) relative to a total mass of the polyisocyanate composition is 0.1% by mass or more and 20% by mass or less.

EP 4 653 481 A1

(52) Cooperative Patent Classification (CPC): (Cont.)

C-Sets
**C08G 18/10, C08G 18/283;**
**C08G 18/10, C08G 18/42**

**Description**

TECHNICAL FIELD

The present invention relates to a polyisocyanate composition, a mixture, a coating composition, and a coating film.

BACKGROUND ART

In recent years, there has been an increasing demand for biodegradable resins that are less harmful to the environment, and there is also a demand for biodegradable polyisocyanates. However, since high-performance urethane compositions have excellent durability and hydrolysis resistance, they may remain in the environment without decomposing even when released into the environment. In order to impart biodegradability to high-performance urethane compositions, it is first necessary to break down the resin particles by hydrolysis catalyzed by enzymes derived from microorganisms.

For example, Patent Document 1 discloses a polyisocyanate obtained by adding a diisocyanate to a polyester polyol containing, as essential components, succinic acid as a carboxylic acid and triethylene glycol as an alcohol.

Citation List

Patent Document

Patent Document 1: Japanese Patent No. 5263644

SUMMARY OF INVENTION

Technical Problem

The polyisocyanate described in Patent Document 1 has room for improvement from the viewpoint of achieving both biodegradability and mechanical strength when formed into a coating film.

The present invention has been made in consideration of the above-mentioned circumstances, and an object of the present invention is to provide a polyisocyanate composition which, when formed into a coating film, exhibits excellent biodegradability and mechanical property.

Solution to Problem

The present invention includes the following aspects.

[1] A polyisocyanate composition comprising a polyisocyanate having an allophanate group, wherein

the polyisocyanate is derived from (A), (C), and (D),
said (A) is at least one diisocyanate selected from the group consisting of aliphatic diisocyanates and alicyclic diisocyanates,
said (C) is a polyester polyol or a polycaprolactone polyol, has a number-average molecular weight (Mn) of 500 or more and 4,000 or less, and is bifunctional or trifunctional,
said (D) is a hydrophilic component,
an average isocyanate functionality of the polyisocyanate composition is 1.8 or more and 3.2 or less,
the polyester polyol is composed of a polyol unit and a dicarboxylic acid unit that has 8 or fewer carbon atoms,
a content of said (C) relative to a total mass of the polyisocyanate composition is more than 50% by mass and 85% by mass or less, and
a content of said (D) relative to a total mass of the polyisocyanate composition is 0.1% by mass or more and 20% by mass or less.

[2] The polyisocyanate composition according to [1], wherein

the polyisocyanate is derived from (B) in addition to said (A), said (C), and said (D), and
said (B) is an alcohol having 1 to 20 carbon atoms.

[3] The polyisocyanate composition according to [1] or [2], wherein a content of isocyanate groups relative to a total mass of the polyisocyanate composition is 1% by mass or more and 13% by mass or less.

[4] The polyisocyanate composition according to any one of [1] to [3], wherein a number-average molecular weight (Mn) of said (C) is 1,000 or more and 4,000 or less.

[5] The polyisocyanate composition according to any one of [1] to [4], wherein the polyol unit constituting the polyester polyol is an aliphatic polyol.

[6] The polyisocyanate composition according to [5], wherein the dicarboxylic acid unit is succinic acid or adipic acid.

[7] The polyisocyanate composition according to [5], wherein the aliphatic polyol is diethylene glycol or triethylene glycol.

[8] The polyisocyanate composition according to any one of [1] to [7], wherein said (D) is a nonionic hydrophilic component having one hydroxyl group and having 3 to 25 ethylene oxide repeating units.

[9] The polyisocyanate composition according to any one of [2] to [8], wherein said (B) is 2-ethylhexanol.

[10] The polyisocyanate composition according to any one of [1] to [9], which is a curing agent for a coating composition or a polyurethane bead composition.

[11] A mixture comprising the polyisocyanate composition according to any one of [1] to [10].

[12] A coating composition comprising a polyol and a curing agent, wherein the polyisocyanate composition according to any one of [1] to [10] is contained as the curing agent.

[13] A coating film obtained by curing the coating composition according to [12].

[14] A biodegradable polyurethane cured product obtained by curing the polyisocyanate composition according to any one of [1] to [10] alone or together with an acrylic polyol.

Advantageous Effects of Invention

According to the present invention, it is possible to provide a polyisocyanate composition which, when formed into a coating film, exhibits excellent biodegradability and mechanical property.

DESCRIPTION OF EMBODIMENTS

Hereinafter, an embodiment for carrying out the present invention (hereinafter, referred to as "the present embodiment") will be described in detail. The following embodiment is an example for explaining the present invention, and is not intended to limit the present invention to the following content. The present invention can be modified in various ways without departing from the scope of the present invention.

In this specification, the term "polyol" refers to a compound having two or more hydroxyl groups (-OH) in a single molecule.

In this specification, the term "polyisocyanate" refers to a reaction product in which a plurality of monomer compounds having two or more isocyanate groups (-NCO) are bonded together.

<Polyisocyanate composition>

The polyisocyanate composition of the present embodiment is a polyisocyanate composition containing a polyisocyanate having an allophanate group.

The polyisocyanate is derived from (A), (C), and (D).

Said (A) is at least one diisocyanate selected from the group consisting of aliphatic diisocyanates and alicyclic diisocyanates.

Said (C) is a polyester polyol or a polycaprolactone polyol, has a number-average molecular weight (Mn) of 500 or more and 4,000 or less, and is bifunctional or trifunctional.

Said (D) is a hydrophilic component.

The polyester polyol is composed of a polyol unit and a dicarboxylic acid unit that has 8 or fewer carbon atoms.

The average number of isocyanate functional groups in the polyisocyanate composition of the present embodiment is 1.8 or more and 3.2 or less.

The content of (C) relative to the total mass of the polyisocyanate composition of the present embodiment is more than 50% by mass and 85% by mass or less.

The content of (D) relative to the total mass of the polyisocyanate composition of the present embodiment is 0.1% by mass or more and 20% by mass or less.

Here, the polyisocyanate composition means a composition consisting only of a compound component having an isocyanate group and a compound component derived from a compound having an isocyanate group, and does not include solvents, various additives, or the like.

The polyisocyanate composition of the present embodiment has the above-mentioned configuration, and therefore, when formed into a coating film, it exhibits excellent biodegradability and mechanical property, as will be shown in the Examples described later.

Each of the components of the polyisocyanate composition of the present embodiment will be described in detail below.

<<(A)>>

(A) is at least one diisocyanate selected from the group consisting of aliphatic diisocyanates and alicyclic diisocyanates.

An aliphatic diisocyanate is a compound having a saturated aliphatic group in the molecule. On the other hand, an alicyclic diisocyanate is a compound having a cyclic aliphatic group in the molecule. From the viewpoint of low viscosity of the obtained polyisocyanate composition, it is preferable to use an aliphatic diisocyanate.

Examples of the aliphatic diisocyanate include 1,4-diisocyanatobutane, 1,5-diisocyanatopentane, 1,6-diisocyanatohexane (HDI), 1,6-diisocyanato-2,2,4-trimethylhexane, methyl 2,6-diisocyanatohexanoate (lysine diisocyanate), and the like.

Examples of the alicyclic diisocyanates include 5-isocyanato-1-isocyanatomethyl-1,3,3-trimethylcyclohexane (isophorone diisocyanate; hereinafter, sometimes abbreviated as "IPDI"), 1,3-bis(isocyanatomethyl)cyclohexane (hydrogenated xylylene diisocyanate), bis(4-isocyanatocyclohexyl)methane (hydrogenated diphenylmethane diisocyanate), 1,4-diisocyanatocyclohexane, and the like.

These diisocyanates may be used alone or in combination of two or more.

Among these, the diisocyanate (A) is preferably HDI, IPDI, a hydrogenated xylylene diisocyanate, or a hydrogenated diphenylmethane diisocyanate because of its industrial availability, and is particularly preferably HDI because of its excellent biodegradability and flexibility.

Hereinafter, aliphatic diisocyanates and alicyclic diisocyanates may be collectively referred to as diisocyanates.

<<(C)>>

(C) is a polyester polyol or a polycaprolactone polyol. Said (C) has a number-average molecular weight (Mn) of 500 or more and 4,000 or less, and is bifunctional or trifunctional.

The polyester polyol (C) is composed of a polyol unit and a dicarboxylic acid unit that has 8 or fewer carbon atoms.

In one embodiment of the present invention, said (C) preferably has biodegradability that allows it to be decomposed in the natural environment.

The polyester polyol in the present embodiment is obtained by a condensation reaction between a dibasic acid, alone or a mixture of dibasic acids, and a dihydric or trihydric alcohol, alone or a mixture of dihydric or trihydric alcohols.

The polycaprolactone polyol in the present embodiment is obtained by ring-opening polymerization of ε-caprolactone with dihydric or trihydric alcohols.

Examples of the dibasic acid include carboxylic acids such as succinic acid, adipic acid, sebacic acid, dimer acid, maleic anhydride, phthalic anhydride, isophthalic acid, terephthalic acid, 1,4-cyclohexanedicarboxylic acid, or the like.

Examples of the dihydric alcohol include ethylene glycol, propylene glycol, diethylene glycol, triethylene glycol, 1,4-butanediol, neopentyl glycol, 3-methyl-1,5-pentanediol, 1,6-hexanediol, trimethylpentanediol, 1,2-, 1,3- and 1,4-cyclohexanediol, and the like.

Examples of the trihydric alcohol include trimethylolpropane, 12-hydroxystearyldiol, a diol obtained by reducing a dimer acid, glycerin, pentaerythritol, 2-methylolpropanediol, an ethoxylated trimethylolpropane, and the like.

Examples of the polyester polyol include MAXIMOL (registered trademark), SDK-145 (trade name, manufactured by Kawasaki Chemical Industries, Ltd., succinic acid unit-containing polyester polyol, number-average molecular weight (Mn) of 1,250, average number of hydroxyl functional groups of 2.0), OD-X-2693 (trade name, manufactured by DIC Corporation, adipic acid unit-containing polyester polyol, number-average molecular weight (Mn) of 3,000, average number of hydroxyl functional groups of 2.0), OD-X-2694 (trade name, manufactured by DIC Corporation, adipic acid unit-containing polyester polyol, number-average molecular weight (Mn) of 4,000, average number of hydroxyl functional groups of 2.0), and the like.

Among the options mentioned above, from the viewpoint of superior biodegradability when formed into a coating film, it is preferable that the polyol unit constituting the polyester polyol is an aliphatic polyol, and it is more preferable that the aliphatic polyol is diethylene glycol or triethylene glycol.

The dicarboxylic acid unit that has 8 or fewer carbon atoms and constitutes the polyester polyol is preferably succinic acid or adipic acid, from the viewpoints of preventing an increase in the viscosity of the polyisocyanate composition and providing a coating film with improved mechanical property.

Examples of the polycaprolactone polyol include OD-X-2542C (trade name, manufactured by DIC Corporation, number-average molecular weight (Mn) of 850, average number of hydroxyl functional groups of 3.0), OD-X-2721 (trade name, manufactured by DIC Corporation, polycaprolactone polyol, number-average molecular weight (Mn) of 1,000, average number of hydroxyl functional groups of 2.0), OD-X-2722 (trade name, manufactured by DIC Corporation, polycaprolactone polyol, number-average molecular weight (Mn) of 2,000, average number of functional hydroxyl groups of 2.0), and the like.

The polyester polyol or the polycaprolactone polyol can be obtained by carrying out a known condensation reaction, for example, by combining the above-mentioned components and heating them at about 160 to 220°C. At least one of the dibasic acid and the dihydric or trihydric alcohol used as raw materials for the polyester polyol needs to have a side chain.

In the present embodiment, the number-average molecular weight (Mn) of (C) is 500 to 4,000, preferably 1,000 to 4,000. When the number-average molecular weight (Mn) is equal to or more than the lower limit, the mechanical property of the coating film is more excellent. On the other hand, when the number-average molecular weight (Mn) is equal to or less than the upper limit, the viscosity of the polyisocyanate is less likely to increase, and the biodegradability of the coating film is more excellent.

The content of (C) relative to the total mass of the polyisocyanate used in the present embodiment is more than 50% by mass and 85% by mass or less, preferably 52% by mass or more and 83% by mass or less, and more preferably 54% by mass or more and 81% by mass or less.

When the content of (C) is equal to or more than the above-mentioned lower limit, the coating film exhibits improved biodegradability. On the other hand, when the content of (C) is equal to or less than the above-mentioned upper limit, the coating film exhibits improved mechanical property.

The polyisocyanate used in the present embodiment contains an allophanate group, and thus exhibits excellent biodegradability when formed into a coating film. The polyisocyanate preferably has a molar ratio of isocyanurate groups to allophanate groups (isocyanurate groups:allophanate groups) of 0:100 or more and less than 25:75.

The molar ratio of allophanate groups to isocyanurate groups can be determined by 1H-NMR. An example of a method for measuring a polyisocyanate composition using HDI and an isocyanate prepolymer obtained therefrom as a raw material by 1H-NMR is shown below.

Example of 1H-NMR measurement method: Polyisocyanate is dissolved in deuterated chloroform at a concentration of 10% by mass (0.03% by mass of tetramethylsilane is added to the polyisocyanate). The chemical shift standard is set to 0 ppm for the hydrogen signal of tetramethylsilane. Measured by 1H-NMR, the area ratio between the signal of the hydrogen atom bonded to the nitrogen of the allophanate group (1 mol of hydrogen atom per 1 mol of allophanate group) at around 8.5 ppm and the signal of the hydrogen atom of the methylene group adjacent to the isocyanurate group (6 mol of hydrogen atom per 1 mol of isocyanurate group) at around 3.85 ppm is measured, and the molar ratio is calculated by the following formula.

Allophanate group/Isocyanurate group = (signal area around 8.5 ppm)/(signal area around 3.85 ppm/6)

In addition, since the uretdione compound is easily dissociated by heat or the like to generate HDI, it is preferable to reduce the content. The content of the uretdione compound is preferably 10% by mass or less, more preferably 5% by mass or less, and even more preferably 3% by mass or less, with respect to the polyisocyanate composition. The content of the uretdione compound can be determined by measuring the area ratio of the peak of a molecular weight of about 336 in gel permeation chromatography (hereinafter, GPC) using a differential refractometer. When there is a peak that interferes with the measurement near the peak of about 336, it can also be determined by a method of quantitatively determining the ratio of the height of the uretdione group peak at about 1,770 cm$^{-1}$ to the height of the allophanate group peak at about 1,720 cm$^{-1}$ using FT-IR, using an internal standard.

The measurement method of GPC will be described below. All measurements related to the molecular weight of polyisocyanate were performed by the following measurement method. Instrument used: HLC-8120 (manufactured by Tosoh Corporation); Columns used: TSK GEL Super H1000, TSK GEL Super H2000, TSK GEL Super H3000 (all manufactured by Tosoh Corporation); Sample concentration: 5 wt/vol% (for example, 50 mg of sample is dissolved in 1 ml of THF); Carrier: THF; Detection method: Different refractometer, Outflow rate of 0.6 ml/min, Column temperature of 40°C. The GPC calibration curve was made using polystyrenes with molecular weights of 50,000 to 2,050 (GL Sciences PSS-06 (Mw 50,000), BK13007 (Mp = 20,000, Mw/Mn = 1.03), PSS-08 (Mw = 9,000), PSS-09 (Mw = 4,000), and 5040-35125 (Mp = 2,050, Mw/Mn = 1.05)). The isocyanurate trimer to heptamer (molecular weight of isocyanurate trimer=504, molecular weight of isocyanurate pentamer=840, molecular weight of isocyanurate heptamer=1,176) of a hexamethylene diisocyanate-based polyisocyanate composition (Duranate TPA-100, manufactured by Asahi Kasei Chemicals Corporation) and HDI (molecular weight=168) were used as standards.

Since the biodegradability and mechanical property of the biuret and other diisocyanate polymers are reduced when the coating film is formed, it is not preferable for the content to be large. The range of the amount of the biuret and other diisocyanate polymers contained in the polyisocyanate composition of the present invention is preferably 10% by mass or less, more preferably 5% by mass or less, and even more preferably 3% by mass or less.

<<(D)>>

(D) is a hydrophilic component, and the content of the hydrophilic component relative to the total mass of the polyisocyanate composition is 0.1% by mass or more and 20% by mass or less.

The content of (D) relative to the total mass of the polyisocyanate composition is preferably 0.2% by mass or more and 15% by mass or less, more preferably 0.5% by mass or more and 10% by mass or less, and even more preferably 0.8% by mass or more and 7% by mass or less. When the content of (D) is equal to or more than the lower limit, decomposition by microorganisms is promoted, and the biodegradability of the coating film is superior. On the other hand, when the content of (D) is equal to or less than the upper limit, the mechanical property of the coating film is superior.

Said (D) is preferably a nonionic hydrophilic component having one hydroxyl group and composed of 3 to 25 ethylene oxide repeating units.

The nonionic hydrophilic component is a polyalkylene oxide ether alcohol containing an ethylene oxide repeating unit, and the number of hydroxyl groups in the hydrophilic component is at least one.

Examples of such compounds include polyethylene glycol, Pluronic (registered trademark) type polyalkylene glycols, and the like. The compound is preferably polyethylene glycol monoalkyl ether, and particularly preferably methoxypolyethylene glycol.

The number of ethylene oxide repeating units is preferably 3 to 25, more preferably 5 to 23, and even more preferably 7 to 20. If the number of ethylene oxide repeating units is 3 or more, it is possible to obtain sufficient emulsifying ability. **If** the number of ethylene oxide repeating units is 25 or less, the crystallinity is not too high and the composition is stable. The nonionic hydrophilic component is incorporated into the structure of the polyisocyanate to exhibit its ability as a surfactant.

The isocyanate group content (hereinafter also referred to as "NCO content") relative to the total mass of the polyisocyanate composition of the present embodiment is preferably 1% by mass or more and 13% by mass or less, more preferably 1% by mass or more and 12% by mass or less, and most preferably 1% by mass or more and 11% by mass or less, in a state substantially free of solvent and diisocyanate. If the NCO content is within the above-mentioned range, a polyisocyanate composition can be obtained that is sufficiently soluble in a low-polarity organic solvent and has sufficient crosslinkability.

The NCO content of the polyisocyanate composition of the present embodiment can be measured by the method described in the Examples described below.

The average number of isocyanate functional groups in the polyisocyanate composition of the present embodiment is 1.8 to 3.2, preferably 1.8 to 3.1, more preferably 1.8 to 2.8, and even more preferably 1.8 to 2.7.

When the average number of isocyanate functional groups is equal to or more than the above-mentioned lower limit, the mechanical property of the coating film is superior. On the other hand, when the average number of isocyanate functional groups is equal to or more than the above-mentioned upper limit, the biodegradability of the coating film is superior.

The average number of isocyanate functional groups in the polyisocyanate composition of the present embodiment can be measured by the method described in the Examples described below.

((B))
In the polyisocyanate composition of the present embodiment, the polyisocyanate is preferably derived from (B) in addition to said (A), (C), and (D).

Said (B) is an alcohol having 1 to 20 carbon atoms.

Said (B) is preferably a monoalcohol having 6 to 20 carbon atoms.

The number of carbon atoms in the alcohol is preferably 16 or less, more preferably 12 or less, and even more preferably 9 or less. When the number of carbon atoms is equal to or less than the above-mentioned upper limit, the hardness of the coating film is sufficient.

Although the lower limit of the number of carbon atoms of the alcohol is not particularly limited, if it is 6 or more, the dissolving power in low-polarity organic solvents tends to be high.

In one embodiment of the present invention, the alcohol has, for example, 6 or more and 16 or less, 6 or more and 12 or less, or 6 or more and 9 or less carbon atoms.

Specific examples of said (B) include a methanol, ethanol, butanol, and the like.

Furthermore, said (B) may be one containing an ether group in the molecule, such as 1-butoxyethanol, 2-butoxyethanol, 1-butoxypropanol, 2-butoxypropanol, 3-butoxypropanol, ethylene glycol monobutyl ether, or the like.

In addition, said (B) may contain an ester group, carbonyl group, or phenyl group, and examples of said (B) include benzyl alcohol and the like. Said (B) is preferably a monoalcohol consisting only of a saturated hydrocarbon group. Furthermore, a branched monoalcohol is more preferable. Examples of such monoalcohols include 1-hexanol, 2-hexanol, 1-heptanol, 1-octanol, 2-ethyl-1-hexanol, 3,3,5-trimethyl-1-hexanol, tridecanol, pentadecanol, palmityl alcohol, stearyl alcohol, cyclopentanol, cyclohexanol, methylcyclohexanol, trimethylcyclohexanol, and the like. Among these, 1-octanol, 2-ethylhexanol, tridecanol, pentadecanol, palmityl alcohol, stearyl alcohol, and 1,3,5-trimethylcyclohexanol are more preferable because they have particularly excellent solubility in low-polarity organic solvents. In addition, 1-hexanol, 2-hexanol, 1-heptanol, 1-octanol, 2-octanol, 2-ethylhexanol, and 3,3,5-trimethyl-1-hexanol are more preferable because they provide a polyisocyanate composition with a lower viscosity. In addition, 2-hexanol, 2-octanol, 2-ethylhexanol, and 3,3,5-trimethyl-1-hexanol are particularly preferable because they have excellent solubility in low-polarity organic solvents and provide a polyisocyanate composition with a lower viscosity.

In the present embodiment, one type of alcohol may be used as said (B), or two or more types of alcohols may be mixed and used.

The viscosity at 25°C of the polyisocyanate composition of the present embodiment is preferably 100 to 10,000 mPa·s in a state substantially free of solvent and diisocyanate. The lower limit of the viscosity is more preferably 150 mPa·s, even more preferably 180 mPa·s, and still even more preferably 200 mPa·s. The upper limit of the viscosity is more preferably 8,000 mPa·s, and even more preferably 16,000 mPa·s. If the viscosity is 100 mPa·s or more, a polyisocyanate composition having sufficient crosslinking properties can be obtained.

The viscosity at 25°C of the polyisocyanate composition of the present embodiment can be measured, for example, using an E-type viscometer (Tokimec Co., Ltd.) at 25°C.

<Production of polyisocyanate>

Hereinafter, a method for producing the polyisocyanate used in the present embodiment will be described.

There are various methods for producing the polyisocyanate used in the present invention, and a representative preferable synthesis method will be described below.

(1) A method in which the above-mentioned (A) and (B) are subjected to a urethane-forming reaction, followed by or simultaneously with an allophanate-forming reaction. Unreacted diisocyanate is then removed through purification to obtain a prepolymer. The obtained prepolymer is mixed with the above-mentioned (C) and (D) to carry out a urethane-forming reaction to obtain the polyisocyanate used in the present embodiment.

(2) A method in which the above-mentioned (A) and (B) are subjected to a urethane-forming reaction, followed by or simultaneously with an allophanate-forming reaction. The allophanate-forming reaction is then terminated with a reaction terminator to obtain a prepolymer. The obtained prepolymer is mixed with the above-mentioned (C) and (D) to carry out a urethane-forming reaction. Unreacted diisocyanate is removed through purification to obtain the polyisocyanate used in the present embodiment.

(3) A method in which the above-mentioned (A), (B), (C), and (D) are subjected to a urethane-forming reaction, followed by or simultaneously with an allophanate-forming reaction. Unreacted diisocyanate is then removed through purification to obtain the polyisocyanate used in the present embodiment.

(4) A method in which the above-mentioned (A) and (B) are subjected to a urethane-forming reaction, followed by or simultaneously with an allophanate-forming reaction. Unreacted diisocyanate is then removed through purification to obtain a prepolymer. The obtained prepolymer is mixed with another prepolymer obtained by mixing the above-mentioned (A), (C), and (D) to carry out a urethane-forming reaction to obtain the polyisocyanate used in the present embodiment. Unreacted diisocyanate is removed through purification as necessary.

(5) A method in which the above-mentioned (A) and (B) are mixed to carry out a urethane-forming reaction, followed by or simultaneously with an allophanate-forming reaction, followed by terminating the allophanate-forming reaction with a reaction terminator. The resulting reaction solution is then mixed with another reaction solution obtained by mixing the above-mentioned (A), (C), and (D) to carry out a urethane-forming reaction, followed by or simultaneously with an allophanate-forming reaction as necessary, and then terminating the allophanate-forming reaction with a reaction terminator, and removing unreacted diisocyanate by purification, to obtain the polyisocyanate used in the present embodiment.

The above-mentioned methods (1) to (5) may be combined.

As the method for producing the polyisocyanate used in the present embodiment, any method may be used as long as said (C) and (D) are mixed in such a ratio that the content of said (C) relative to the total mass of the polyisocyanate composition of the present embodiment is more than 50% by mass and 85% by mass or less, and the content of said (D) relative to the total mass of the polyisocyanate composition is 0.1% by mass or more and 20% by mass or less.

The urethane-forming reaction temperature is preferably 20 to 200°C, more preferably 40 to 150°C, and even more preferably 60 to 120°C. At 20°C or higher, the reaction is fast, while at 200°C or lower, side reactions such as uretdione formation, etc. are suppressed, and coloration is also suppressed. The urethane-forming reaction time is preferably 10 minutes to 24 hours, more preferably 15 minutes to 15 hours, and even more preferably 20 minutes to 10 hours. If the reaction time is 10 minutes or longer, the reaction can be completed, and if it is 24 hours or shorter, there is no problem with production efficiency and side reactions are suppressed.

The urethane-forming reaction can be carried out without a catalyst or in the presence of a tin or amine catalyst.

The allophanate-forming reaction is preferably carried out at a temperature of 20 to 200°C. More preferably, it is 40 to 180°C, even more preferably 60 to 160°C, still even more preferably 90 to 150°C, and most preferably 110 to 150°C. At a temperature of 20°C or higher, the amount of the allophanate formation catalyst is reduced, and the time required for the completion of the reaction is short. At a temperature of 200°C or lower, side reactions such as uretdione formation, etc. are suppressed, and coloration of the reaction product is suppressed.

When the allophanate-forming reaction is carried out by any of the methods (1) to (5), it is preferable to use a catalyst, and in particular it is necessary to select a catalyst that produces a polyisocyanate with a molar ratio of allophanate groups/isocyanurate groups of 95/5 to 100/0. Examples of such catalysts include carboxylates of zinc, tin, zirconium, zirconyl, etc., and mixtures of these.

The allophanate formation catalyst is preferably used in an amount of 0.001 to 2.0% by mass, more preferably 0.01 to 0.5% by mass, with respect to the total mass of the reaction solution. When the amount is 0.001% by mass or more, the catalytic effect can be fully exerted. When the amount is 2% by mass or less, the allophanate-forming reaction can be easily controlled.

In the present invention, the method of adding the allophanate formation catalyst is not limited. For example, the allophanate formation catalyst may be added before the production of a compound containing a urethane group, i.e., before the urethane-forming reaction of a diisocyanate and an organic compound having a hydroxyl group, during the urethane-forming reaction of a diisocyanate and an organic compound having a hydroxyl group, or after the production of a compound containing a urethane group. As the method of addition, the required amount of the allophanate formation catalyst may be added all at once or may be added in several divided portions. Alternatively, a method of continuously adding the allophanate formation catalyst at a constant addition rate may be adopted.

Examples of the catalysts for deriving a polyisocyanate containing an isocyanurate group from a diisocyanate monomer include commonly used isocyanurate-forming reaction catalysts. The isocyanurate-forming reaction catalyst is not particularly limited, and is preferably one that is generally basic, and examples thereof include: (1) hydroxides of tetraalkylammonium such as tetramethylammonium, tetraethylammonium, tetrabutylammonium, or the like; organic weak acid salts thereof such as acetates, octylates, myristates, benzoates, or the like; (2) hydroxides of hydroxyalkylammonium such as trimethylhydroxyethylammonium, trimethylhydroxypropylammonium, triethylhydroxyethylammonium, and triethylhydroxypropylammonium; organic weak acid salts thereof such as acetates, octylates, myristates, benzoates, or the like; (3) metal salts of alkylcarboxylic acids such as tin, zinc, lead, or the like, such as acetates, caproic acid, octylate, myristic acid, or the like; (4) metal alcoholates of sodium, potassium, and the like; (5) aminosilyl group-containing compounds such as hexamethylenedisilazane, or the like; (6) Mannich bases; (7) combined use of tertiary amines and epoxy compounds; and (8) phosphorus-based compounds such as tributylphosphine, or the like.

Among the isocyanurate-forming reaction catalysts, from the viewpoint of preventing the generation of unnecessary by-products, a weak organic acid salt of a quaternary ammonium is preferable, and a weak organic acid salt of a tetraalkylammonium is more preferable.

The isocyanurate-forming reaction catalyst is preferably 10 ppm by mass or more and 1,000 ppm by mass or less with respect to the mass of the charged diisocyanate monomer. The upper limit is more preferably 500 ppm by mass, and even more preferably 100 ppm by mass. The isocyanurate-forming reaction temperature is preferably 50°C or higher and 120°C or lower, and more preferably 60°C or higher and 90°C or lower. By setting the isocyanurate-forming reaction temperature to 120°C or lower, coloration of the polyisocyanate tends to be effectively suppressed.

The urethane-forming reaction, allophanate-forming reaction, and isocyanurate-forming reaction can be carried out without a solvent. In addition to the low-polarity organic solvents described above, ester-based solvents such as ethyl acetate, butyl acetate, or the like, ketone-based solvents such as methyl ethyl ketone, or the like, aromatic solvents such as toluene, xylene, diethylbenzene, or the like, organic solvents that do not have reactivity with isocyanate groups such as dialkyl polyalkylene glycol ether, and mixtures thereof can be used as the solvent if necessary.

The processes of the urethane-forming reaction, allophanate-forming reaction, and isocyanurate-forming reaction in the present invention can be followed by measuring the NCO content or the refractive index of the reaction solution.

The allophanate-forming reaction or the isocyanurate-forming reaction can be stopped by cooling to room temperature or adding a reaction terminator. When a catalyst is used, it is preferable to add a reaction terminator because it can suppress side reactions. The amount of the reaction terminator added is preferably 0.25 to 20 times the molar amount of the catalyst, more preferably 0.5 to 16 times the molar amount of the catalyst, and even more preferably 1.0 to 12 times the molar amount of the catalyst. At 0.25 times or more, it is possible to completely deactivate the catalyst. At 20 times or less, storage stability is good. Any reaction terminator that can deactivate the catalyst may be used. Examples of the reaction terminator include compounds that exhibit phosphoric acidity such as phosphoric acid, pyrophosphoric acid, or the like; monoalkyl or dialkyl esters of phosphoric acid, pyrophosphoric acid, and the like; halogenated acetic acids such as monochloroacetic acid; benzoyl chloride, sulfonic acid esters, sulfuric acid, sulfate esters, ion exchange resins, chelating agents, and the like. From an industrial point of view, phosphoric acid, pyrophosphoric acid, metaphosphoric acid, polyphosphoric acid, and monoalkyl and dialkyl phosphates are preferable because they are less likely to corrode stainless steel. Examples of the monoesters and diesters include monoethyl and diethyl phosphates, monobutyl and dibutyl phosphates, mono(2-ethylhexyl) and di(2-ethylhexyl) phosphates, monodecyl and didecyl phosphates, monolauryl and dilauryl phosphates, monotridecyl and ditridecyl phosphates, monooleyl and dioleyl phosphates, mixtures thereof, and the like.

It is also possible to use an adsorbent such as silica gel or activated carbon as a terminator, preferably in an amount of 0.05 to 10% by mass with respect to the diisocyanate used in the reaction.

After the reaction is completed, the unreacted diisocyanate and the solvent may be separated from the polyisocyanate. From the viewpoint of safety, it is preferable to separate the unreacted diisocyanate. Examples of the method for separating the unreacted diisocyanate and the solvent include thin film distillation and solvent extraction.

In one embodiment of the invention, the polyisocyanate composition is a curing agent for a coating composition or a polyurethane bead composition.

In one embodiment of the present invention, a coating composition containing a polyol and a curing agent contains the polyisocyanate composition of the present embodiment as a curing agent.

In one embodiment of the present invention, a polyurethane bead composition containing a polyol and a curing agent contains the polyisocyanate composition of the present embodiment as a curing agent.

In one aspect of the present invention, a mixture contains the polyisocyanate composition of the present embodiment. Examples of the mixture include a coating composition, a polyurethane bead composition, and the like. In the mixture, components other than the polyisocyanate composition are not particularly limited, and may contain a solvent, a base agent, various additives, and the like.

Examples of the polyol contained in the coating composition or polyurethane bead composition include aliphatic hydrocarbon polyols, polyether polyols, polyester polyols, epoxy resins, fluorine-containing polyols, acrylic polyols, and the like, with acrylic polyols being preferable.

[Aliphatic hydrocarbon polyols]

Examples of the aliphatic hydrocarbon polyols include a hydroxyl-terminated polybutadiene and hydrogenated products thereof.

[Polyether polyols]

Examples of the polyether polyols include those obtained by any one of the following methods (1) to (3).

(1) Polyether polyols or polytetramethylene glycols obtained by adding an alkylene oxide, either alone or in a mixture, to a polyhydric alcohol, either alone or in a mixture.
(2) Polyether polyols obtained by reacting an alkylene oxide with a polyfunctional compound.
(3) Polymer polyols obtained by polymerizing acrylamide or the like using the polyether polyols obtained in (1) or (2) as a medium.

Examples of the polyhydric alcohol in (1) mentioned above include glycerin, propylene glycol, and the like.
Examples of the alkylene oxide in (2) mentioned above include ethylene oxide, propylene oxide, and the like.
Examples of the polyfunctional compound in (2) mentioned above include ethylenediamine, ethanolamines, and the like.

[Polyester polyols]

Examples of the polyester polyols include the following polyester polyols (1E), (2E), and the like.
(1E) Polyester polyol resins obtained by a condensation reaction between a dibasic acid, alone or a mixture of two or more, and a polyhydric alcohol, alone or a mixture of two or more.
(2E) Polycaprolactones obtained by ring-opening polymerization of ε-caprolactone with polyhydric alcohols.
Examples of the dibasic acid include carboxylic acids such as succinic acid, adipic acid, dimer acid, maleic anhydride, phthalic anhydride, isophthalic acid, terephthalic acid, 1,4-cyclohexanedicarboxylic acid, and the like.
Examples of the polyhydric alcohol in (1E) include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol, ethoxylated trimethylolpropane, and the like.

[Epoxy resins]

Examples of the epoxy resins include novolac type epoxy resins, β-methylepicrotype epoxy resins, cyclic oxirane type epoxy resins, glycidyl ether type epoxy resins, glycol ether type epoxy resins, epoxy type aliphatic unsaturated compounds, epoxidized fatty acid esters, ester type polycarboxylic acids, aminoglycidyl type epoxy resins, halogenated type epoxy resins, and resorcinol type epoxy resins, as well as resins obtained by modifying these epoxy resins with amino compounds, polyamide compounds, or the like.

[Fluorine-containing polyols]

Examples of the fluorine-containing polyols include copolymers of fluoroolefins, cyclohexyl vinyl ethers, hydroxyalkyl vinyl ethers, and monocarboxylic acid vinyl esters, which are disclosed in Reference Documents 1 (Japanese Unexamined Patent Application, First Publication No. S57-34107) and 2 (Japanese Unexamined Patent Application, First Publication No. S61-275311), or the like.

[Acrylic polyols]

Acrylic polyols can be obtained by polymerizing a polymerizable monomer having one or more active hydrogens in a single molecule, or by copolymerizing a polymerizable monomer having one or more active hydrogens in a single molecule with, as necessary, another monomer copolymerizable with the polymerizable monomer.
Examples of the polymerizable monomer having one or more active hydrogens in a single molecule include the following (i) to (iii). These may be used alone or in combination of two or more.

(i) Acrylic esters having active hydrogen, such as 2-hydroxyethyl acrylate, 2-hydroxypropyl acrylate, 2-hydroxybutyl acrylate, or the like.
(ii) Methacrylic acid esters having active hydrogen, such as 2-hydroxyethyl methacrylate, 2-hydroxypropyl methacrylate, 2-hydroxybutyl methacrylate, or the like.
(iii) (Meth)acrylic acid esters having polyvalent active hydrogen, such as acrylic acid monoesters or methacrylic acid monoesters of glycerin, acrylic acid monoesters or methacrylic acid monoesters of trimethylolpropane, or the like.

Examples of other monomers copolymerizable with the polymerizable monomer include the following (i) to (v). These may be used alone or in combination of two or more.

(i) Acrylic esters such as methyl acrylate, ethyl acrylate, isopropyl acrylate, n-butyl acrylate, 2-ethylhexyl acrylate, or the like.
(ii) Methacrylic acid esters such as methyl methacrylate, ethyl methacrylate, isopropyl methacrylate, n-butyl methacrylate, isobutyl methacrylate, n-hexyl methacrylate, cyclohexyl methacrylate, lauryl methacrylate, glycidyl methacrylate, or the like.
(iii) Unsaturated carboxylic acids such as acrylic acid, methacrylic acid, maleic acid, itaconic acid, or the like.
(iv) Unsaturated amides such as acrylamide, N-methylol acrylamide, diacetone acrylamide, or the like.
(v) Styrene, vinyl toluene, vinyl acetate, acrylonitrile, or the like.

Further examples include acrylic polyols obtained by copolymerizing polymerizable ultraviolet-stable monomers disclosed in Reference Document 3 (Japanese Unexamined Patent Application, First Publication No. H1-261409) and Reference Document 4 (Japanese Unexamined Patent Application, First Publication No. H3-006273), and the like.
Examples of the polymerizable ultraviolet-stable monomers include 4-(meth)acryloyloxy-2,2,6,6-tetramethylpiperidine, 4-(meth)acryloylamino-2,2,6,6-tetramethylpiperidine, 1-crotonoyl-4-crotonoyloxy-2,2,6,6-tetramethylpiperidine, 2-hydroxy-4-(3-methacryloxy-2-hydroxypropoxy)benzophenone, and the like.
For example, the above-mentioned monomer components are solution-polymerized in the presence of a known radical polymerization initiator such as a peroxide or an azo compound, and the resulting solution is diluted with an organic solvent, etc., as necessary, to obtain an acrylic polyol.
When obtaining a water-based acrylic polyol, it can be produced by a known method such as a method of solution polymerization of an olefinic unsaturated compound and converting it into a water layer, or emulsion polymerization, or the like. In this case, water solubility or water dispersibility can be imparted by neutralizing the acidic moiety of a carboxylic acid-containing monomer such as acrylic acid or methacrylic acid, or a sulfonic acid-containing monomer, etc., with an amine or ammonia.
In one embodiment of the present invention, the coating composition is obtained by the production method described below.

When the coating composition of the present embodiment is a solvent-based coating composition, for example, first, add the polyisocyanate composition as a curing agent to a polyol or its solvent dilution, if necessary, to which various additives are added. Next, if necessary, add a solvent to adjust the viscosity. Then, by stirring by hand or using a stirring device such as a mixer, a solvent-based coating composition can be obtained.

In addition, the order of mixing the base component mainly composed of a polyol, the curing agent component mainly composed of the polyisocyanate composition, and the various additives is not particularly limited, and they can be mixed, for example, in the following order.

1) The curing agent component is mixed at the painting site into the base component, which has already been mixed with various additives.
2) At the painting site, the base component and the curing agent component are mixed, and then various additives are mixed in.
3) The base component, which has been mixed with various additives in advance, is mixed with the curing agent component, which has been mixed with various additives in advance, at the painting site.

(Optional ingredients)

In one embodiment of the present invention, the coating composition may further contain an antioxidant in addition to the polyisocyanate composition and the base agent. The antioxidant may be added at the stage of producing the coating composition, or may be added to the polyisocyanate composition in advance. The antioxidant may be used alone or in combination of two or more.

The antioxidant is not particularly limited, and examples thereof include substances having an antioxidant effect that are used as light resistance stabilizers, heat resistance stabilizers, and the like.

The antioxidant used as the light resistance stabilizer is not particularly limited, and examples thereof include hindered amine-based antioxidants, benzophenone-based antioxidants, benzotriazole-based antioxidants, triazine-based antioxidants, cyanoacrylate-based antioxidants, and the like.

Examples of the hindered amine antioxidant include, but are not limited to, Adeka STAB LA-52 (trade name), Adeka STAB LA-68 (trade name), Adeka STAB LA-77Y (trade name) (each manufactured by Adeka Corporation), Tinuvin 622 (trade name), Tinuvin 765 (trade name), Tinuvin 770 (trade name), Tinuvin 791 (trade name) (each manufactured by BASF Corporation), and the like.

The benzophenone-based antioxidant is not particularly limited, but examples thereof include Chimassorb 81 (trade name) (manufactured by BASF Corporation).

The benzotriazole-based antioxidant is not particularly limited, and examples thereof include Tinuvin P (trade name), Tinuvin 234 (trade name) (both manufactured by BASF), and the like.

The triazine-based antioxidant is not particularly limited, and examples thereof include Tinuvin 1577ED (trade name) (manufactured by BASF Corporation), and the like.

The cyanoacrylate-based antioxidant is not particularly limited, and examples thereof include Uvinul 3035 (trade name) (manufactured by BASF Corporation), and the like.

The antioxidant used as the heat stabilizer is not particularly limited, and examples thereof include hindered phenol-based antioxidants, phosphorus-containing antioxidants, sulfur-containing antioxidants, vitamin E-based antioxidants, hydroxyamine-based antioxidants, and the like.

Examples of the hindered phenol-based antioxidant include, but are not limited to, dibutylhydroxytoluene (hereinafter, may be abbreviated as "BHT"), Irganox 1010 (trade name), Irganox 1135 (trade name), Irganox 1330 (trade name), Irganox 3114 (trade name), Irganox 565 (trade name), Irganox 1520L (trade name) (each manufactured by BASF Corporation), Adeka STAB AO-20 (trade name), Adeka STAB AO-30 (trade name), Adeka STAB AO-50 (trade name), Adeka STAB AO-60 (trade name), Adeka STAB AO-80 (trade name) (each manufactured by Adeka Corporation), and the like.

Examples of the phosphorus-containing antioxidant include, but are not limited to, ADK STAB PEP-8 (trade name), ADK STAB HP-10 (trade name), ADK STAB 1178 (trade name), ADK STAB C (trade name) (each manufactured by Adeka Corporation), Irgafos 168, Irgafos 38 (trade name) (manufactured by BASF), and Sumilizer GP (trade name) (manufactured by Sumitomo Chemical Co., Ltd.), and the like.

The sulfur-containing antioxidant is not particularly limited, and examples thereof include Irganox PS800FL (trade name) (manufactured by BASF Corporation), and the like.

The vitamin E antioxidant is not particularly limited, and examples thereof include Irganox E201 (trade name) (manufactured by BASF Corporation), and the like.

The hydroxylamine-based antioxidant is not particularly limited, and examples thereof include Irgastab FS042 (trade name) (manufactured by BASF Corporation), and the like.

Among them, the antioxidant is preferably at least one selected from the group consisting of hindered phenol antioxidants, hindered amine antioxidants, sulfur-containing antioxidants, and phosphorus-containing antioxidants, and more preferably at least one selected from the group consisting of Tinuvin 765 (trade name), BHT, Irganox 565 (trade name), Adekastab C (trade name), and Sumilizer GP (trade name).

The coating composition of the present embodiment can be used as a coating material for, but not limited to, spray coating, air spray coating, brush coating, immersion coating, roll coating, curtain flow coating, bell coating, electrostatic coating, and the like.

The coating composition of the present embodiment is also useful as a coating material for molded articles made of materials such as metals (steel plates, surface-treated steel plates, etc.), plastics, wood, films, and inorganic materials, and is particularly suitable as a coating material for metals or plastics.

The coating composition of the present embodiment is suitable, for example, as a coating material for architecture, a coating material of heavy-duty corrosion protection, a coating material for automobiles, a coating material for smart home appliances, and a coating material for information appliances such as personal computers and mobile phones, etc., and is particularly suitable as a top clear coating material for architectural structures, automobile bodies, metal parts for automobiles, plastic parts for automobiles, metal parts for information home appliances, or plastic parts for information home appliances.

In one embodiment of the present invention, the polyurethane bead composition is obtained by the production method described below.

As a representative example of a method for producing a polyurethane bead composition, a method for producing polyurethane beads will be described below.

The method for producing polyurethane beads is not particularly limited, and examples thereof include the following two production methods (first production method and second production method) using suspension polymerization. That is, the polyurethane beads obtained by these production methods are crosslinked polyurethane beads obtained by suspension polymerization. Among them, the first production method is preferable as the method for producing polyurethane beads because of the simplicity of the production method.

[First production method]

The first production method for polyurethane beads includes a step of dispersing bead raw material in water in a particulate form and reacting it to prepare a polyurethane bead suspension (hereinafter, sometimes referred to as the "first bead preparation step"), and a step of separating the polyurethane bead suspension into solid and liquid (hereinafter, sometimes referred to as the "first post-treatment step").

(First bead preparation step)

In the first bead preparation step, bead raw material is dispersed in water in the form of particles and reacted to prepare a polyurethane bead suspension.

The bead raw material in the first bead preparation step includes the above-mentioned polyol and the polyisocyanate composition of the present embodiment.

The molar ratio (NCO/OH) of the isocyanurate groups in the polyisocyanate composition of the present embodiment to the hydroxyl groups of the polyol is preferably from 1 to 20. When the NCO/OH ratio is equal to or more than the above-mentioned lower limit, unreacted polyol is less likely to remain, while when the NCO/OH ratio is equal to or less than the above-mentioned upper limit, the amount of soft segments in the polyurethane beads increases, and the glass transition temperature is more clearly observed.

The bead raw material may contain a colorant such as a dye or pigment in addition to the above-mentioned polyol and the polyisocyanate composition of the present embodiment, provided that the colorant used here does not inhibit the urethane-forming reaction.

When a colorant is included, colored polyurethane beads can be obtained. By adding colored polyurethane beads to a coating material, a coating film with a design such as a velvet or suede texture can be obtained.

In addition, when the viscosity of the suspension is high and it becomes difficult to handle, the bead raw material may contain a dilution solvent. The dilution solvent may be any solvent that does not inhibit the polymerization reaction.

The bead raw material may also contain a catalyst, such as dibutyltin dilaurate, or the like.

Furthermore, in order to improve various physical properties of the resulting polyurethane beads, the bead raw material may contain ultraviolet absorbents, antioxidants, metal powders, fragrances, and the like.

In the first bead preparation step, the water to which the bead raw material is added may contain a suspension stabilizer.

The suspension stabilizer is not particularly limited as long as it is generally used in suspension polymerization, and may be organic or inorganic. Specific examples of the suspension stabilizer include cellulose-based water-soluble resins, polyvinyl alcohol, polyacrylates, polyethylene glycol, polyvinylpyrrolidone, polyacrylamides, tertiary phosphates, and the like. Examples of the cellulose-based water-soluble resins include methylcellulose, hydroxyethylcellulose, hydroxypropylmethylcellulose, carboxymethylcellulose, and the like. These suspension stabilizers may be used alone or in combination of two or more.

The suspension stabilizer may be used in combination with a surfactant. The surfactant used in combination with the suspension stabilizer may be any of anionic surfactants, cationic surfactants, nonionic surfactants, and amphoteric surfactants.

The amount of the suspension stabilizer to be added is preferably 0.5 parts by mass or more and 30 parts by mass or less with respect to 100 parts by mass of the bead raw material. When the amount of the suspension stabilizer to be added is within the above-mentioned range, the average particle size of the polyurethane beads tends to be more likely to fall within the range of 1 $\mu$m to 100 $\mu$m, which is appropriate as a filler.

Furthermore, by setting the amount of the suspension stabilizer to be added at or below the upper limit, it is possible to more effectively prevent the average particle size from becoming less than 1 $\mu$m, and also to more effectively prevent the viscosity of the suspension from increasing, thereby preventing solid-liquid separation and washing from becoming difficult. Furthermore, by setting the amount of the suspension stabilizer to be added at or above the lower limit, it is possible to more effectively prevent aggregation of particles, thereby preventing the particle size from becoming greater than 100 $\mu$m.

The amount of water in which the suspension stabilizer is dissolved or dispersed is preferably 30 parts by mass or more and 1,000 parts by mass or less with respect to 100 parts by mass of the bead raw material. When the amount of water is equal to or more than the above-mentioned lower limit, the bead raw material can be dispersed more stably. On the other hand, when the amount of water is equal to or less than the above-mentioned upper limit, the amount of polyurethane beads produced per suspension polymerization can be more sufficiently secured.

In order to disperse the bead raw material into particles after adding it to water containing a suspension stabilizer, a method of stirring is usually adopted. The stirring speed is preferably adjusted appropriately so that droplets containing the above-mentioned polyol and the polyisocyanate composition of the present embodiment have a predetermined particle size.

After the adjustment of the particle size of the droplets is completed, the mixture is heated to a temperature of 30°C to 90°C, and the polyol or water is reacted with the polyisocyanate composition of the present embodiment for 1 hour to 6 hours to perform suspension polymerization. A polyurethane bead suspension is obtained by this suspension polymerization.

(First post-treatment step)

In the first post-treatment step, the polyurethane bead suspension is subjected to solid-liquid separation.

As a method for solid-liquid separation in the first post-treatment step, for example, filtration, centrifugation, and the like are applied.

After the solid-liquid separation, washing and drying are preferably carried out.

In the washing step, the separated and recovered polyurethane beads are washed with water or the like to remove the suspension stabilizer and the like remaining in the polyurethane beads.

The drying method may be, for example, a heat drying method, an air flow drying method, a vacuum drying method, an infrared drying method, and the like. For example, when the heat drying method is applied, the drying temperature may be 40°C or higher and 110°C or lower, and the drying time may be 2 hours or more and 40 hours or less.

When the suspension is subjected to solid-liquid separation and washing, the suspension may be treated with an enzyme such as a cellulose decomposing enzyme or a polyvinyl alcohol decomposing enzyme that decomposes the suspension stabilizer, or a reagent such as hypochlorite. By treating with the enzyme or reagent, the viscosity of the suspension can be reduced, making the solid-liquid separation easier and also making washing easier.

[Second production method]

The second production method includes a step of reacting a polyol with the polyisocyanate composition of the present embodiment to obtain a prepolymer having an isocyanate group terminal (hereinafter, may be referred to as a "prepolymer preparation step"); a step of dispersing the bead raw material containing the prepolymer having an isocyanate group terminal in water in a particulate form and reacting to prepare a polyurethane bead suspension (hereinafter, may be referred to as "second bead preparation step"); and a step of performing solid-liquid separation of the polyurethane bead suspension (hereinafter, may be referred to as "second post-treatment step").

(Prepolymer preparation step)

In the prepolymer preparation step, the polyol and the polyisocyanate composition of the present embodiment are reacted in advance to obtain a prepolymer having an isocyanate group at its end. This prepolymer preparation step can be carried out using a commonly known method and is not particularly limited.

If the viscosity is too high, the reaction may be carried out by diluting with a solvent that does not contain active hydrogen that reacts with the isocyanate group.

The reaction temperature during the synthesis of the isocyanate-terminated prepolymer is preferably 30°C or higher and 90°C or lower.

When synthesizing the isocyanate-terminated prepolymer, a urethane formation catalyst may be added. Examples of the urethane formation catalyst include metal catalysts such as dibutyltin laurate or the like, amine catalysts such as triethylamine or the like, and the like.

The molar ratio (NCO/OH) of the isocyanurate groups in the polyisocyanate composition of the present embodiment to the hydroxyl groups in the above-mentioned polyol is not particularly limited, and is preferably in the range of 2 or more and 10 or less.

(Second bead preparation step and second post-treatment step)

The second bead preparation step in the second production method is similar to the "first bead preparation step" in the above-mentioned "first production method", in which the isocyanate-terminated prepolymer is reacted with water to carry out suspension polymerization. In this suspension polymerization, urea bonds are formed by the reaction of the isocyanate-terminated prepolymer with water, and polyurethane beads can be obtained. Therefore, a polyurethane bead suspension can be obtained by this suspension polymerization.

The second post-treatment step in the second production method is similar to the "first post-treatment step" in the above-mentioned "first production method", and the polyurethane beads can be recovered by carrying out the post-treatment step.

In one aspect of the present invention, the polyurethane bead composition is suitably used, for example, as a coating agent, a thermoplastic resin, polyurethane beads, or the like, without any particular limitation. Among them, the polyurethane bead composition of the present embodiment is particularly suitably used as polyurethane beads.

The polyurethane beads made of the polyurethane bead composition of the present embodiment can be used as a filler for paints, plastics, adhesives, cosmetics, or the like, and can exhibit high elasticity and high durability. In addition, the polyurethane beads made of the polyurethane bead composition of the present embodiment have high flexibility, a low specific gravity, high affinity with binder resins, and excellent water resistance.

The upper limit of the average particle size of the polyurethane beads is not particularly limited, but is preferably 20 $\mu$m, more preferably 15 $\mu$m, further preferably 12 $\mu$m, and particularly preferably 10 $\mu$m.

On the other hand, the lower limit of the average particle size of the polyurethane beads is not particularly limited, and from the viewpoint of ease of production, it is preferably 0.1 $\mu$m.

That is, the average particle size of the polyurethane beads is preferably 0.1 $\mu$m or more and 20 $\mu$m or less, more preferably 0.1 $\mu$m or more and 15 $\mu$m or less, even more preferably 0.1 $\mu$m or more and 12 $\mu$m or less, and particularly preferably 0.1 $\mu$m or more and 10 $\mu$m or less.

In this specification, the term "average particle size" means, when the volume average particle size is 0.1 $\mu$m or more, the volume-based average particle size (volume average particle size) measured using a laser diffraction particle size distribution meter (e.g., SALD2100 manufactured by Shimadzu Corporation).

The average particle size of the polyurethane beads can be easily adjusted by adjusting the amount of the suspension stabilizer used during the production and by adjusting the type of isocyanate used. Specifically, the larger the amount of the suspension stabilizer, the smaller the average particle size, and the smaller the amount of the suspension stabilizer, the larger the average particle size. In addition, by increasing the usage ratio of the polyisocyanate composition of the present embodiment in the polyurethane bead composition, the average particle size can be reduced and the water resistance can be increased.

The coating film of the present embodiment is produced by curing the above-mentioned coating composition. The coating film exhibits excellent biodegradability and mechanical property.

In one embodiment of the present invention, a method for producing a coating film is a method comprising a step of curing the above-mentioned coating composition.

In one embodiment of the present invention, the coating film can be produced by applying the coating composition onto a substrate using a known coating method such as spray coating, air spray coating, brush coating, immersion coating, roll coating, curtain flow coating, bell coating, electrostatic coating, or the like, and then curing the applied coating composition.

Examples of the substrate to be coated include the same molded articles made of the materials exemplified above in the applications of the coating composition.

The biodegradable polyurethane cured product of the present embodiment is obtained by curing the polyisocyanate composition alone or together with an acrylic polyol. The cured product exhibits excellent biodegradability and mechanical property.

In one embodiment of the present invention, the cured product can be produced by applying the polyisocyanate composition alone or together with an acrylic polyol onto a substrate using a known coating method exemplified in the above-mentioned method for producing a coating film, and then curing the applied composition.

Examples of the substrate to be coated include the same molded articles made of the materials exemplified above in the applications of the coating composition. Examples

The present invention will be described in more detail below with reference to the Examples and Comparative Examples. However, the present invention is not limited to the following Examples as long as it does not depart from the scope of the present invention.

<Measurement method>

[Physical property 1: Number average molecular weight (Mn)]

The number-average molecular weight (Mn) of the isocyanate prepolymer and the polyisocyanate composition was obtained by measuring the number-average molecular weight (Mn) of the polystyrene standard by GPC measurement under the measurement conditions shown below.

(Measurement conditions)

Apparatus: Tosoh Corporation HLC-8120GPC (trade name)
Column: Tosoh Corporation, TSKgel Super H1000 (trade name) × 1

TSKgel Super H2000 (trade name) × 1
TSKgel Super H3000 (trade name) × 1

Carrier: Tetrahydrofuran
Detection method: Differential refractometer

[Property 2: Isocyanate group content (NCO%)]

The isocyanate group content (NCO%) (mass%) was determined by neutralizing the isocyanate groups in each polyisocyanate with an excess of 2N amine and then back titrating with 1N hydrochloric acid.

[Physical Property 3: Average functional number of isocyanate groups]

The average number of functional groups of the isocyanate prepolymer and the polyisocyanate composition is the number of isocyanate functional groups statistically contained in a single molecule of polyisocyanate, and can be calculated from the number-average molecular weight (Mn) and the isocyanate group content (NCO%) of the polyisocyanate using the following formula.

$$\text{Average number of functional groups} = Mn \times NCO\% / 4{,}200$$

<Evaluation method>

[Evaluation 1: Biodegradability]

The polyisocyanate compositions obtained in the Examples and Comparative Examples were mixed with an acrylic polyol (Setlax 1184 (trade name) manufactured by Nuplex) so that the equivalent ratio of isocyanate groups to hydroxyl groups was 1.1, and toluene was added so that the solid content mass of the polyisocyanate composition and the acrylic polyol combined was 45% by mass, to obtain a coating composition. The coating composition obtained was applied to a PP coated plate with an applicator so that the film thickness after drying was 40 μm, and the plate was baked at 120°C for 30 minutes, and then the coating film was aged for one week under conditions of 20°C and 63% humidity.

After weighing 0.1 g of the obtained coating film, it was buried in a culture soil at a depth of 8 cm and kept in a small environmental testing machine at 60°C and 50% humidity for 40 days. After that, the coating film was removed, dried, and the remaining mass of the coating film was measured. The percentage of the remaining mass after removal, divided by the mass of the coating film before burial, was calculated as the residual rate (mass%). Based on the following evaluation criteria, the biodegradability of each coating film was assessed. A lower residual rate indicates better biodegradability, while a higher rate indicates poorer biodegradability.

(Evaluation Criteria)

A: Residual rate is less than 95% by mass.
B: Residual rate is 95% by mass or more and less than 98%.
C: Residual rate is 98% by mass or more.

[Evaluation 2: Mechanical property]

The polyisocyanate compositions obtained in the Examples and Comparative Examples were mixed with an acrylic polyol (Setlax 1152 (trade name) manufactured by Nuplex) so that the equivalent ratio of isocyanate groups to hydroxyl groups was 1.0, and toluene was added so that the solid content mass of the polyisocyanate composition and acrylic polyol combined was 45% by mass, to obtain a coating composition. The coating composition was applied to a PP coated panel with an applicator so that the film thickness after drying was 40 $\mu$m, and the coating was baked at 80°C for 30 minutes, and then the coating was aged for one week under conditions of 20°C and 63% humidity.

The obtained coating film was cut into a test piece having a width of 10 mm and a length of 100 mm, and the test piece was set in a tensile tester (manufactured by Shimadzu Corporation, trade name: AGS-X) so that the gripping distance was 20 mm, and a tensile test was performed at a speed of 20 mm/min to measure the elongation and tensile breaking stress. The obtained results were evaluated according to the following evaluation criteria. The higher the elongation and the larger the breaking stress, the better the mechanical property; conversely, the lower they are, the worse the mechanical property.

(Evaluation Criteria)

A: Elongation is 200% or more and breaking stress is 5 MPa or more.
B: Elongation is 100% or more and less than 200%, and breaking stress is 3 MPa or more and less than 5 MPa.
C: Elongation is less than 100% and breaking stress is less than 3 MPa.

<Materials used>

The following materials were used as the polyester polyol or polycaprolactone polyol (C).

Polycaprolactone polyol CB-1: OD-X-2542C (trade name, manufactured by DIC Corporation, number-average molecular weight 850, average number of functional hydroxyl groups: 3.0).

Polyester polyol C-1: Maximol (registered trademark) SDK-145 (trade name, manufactured by Kawasaki Chemical Industries, Ltd., polyester polyol containing succinic acid units, number-average molecular weight: 1,250, average functionality of hydroxyl groups: 2.0).

Polycaprolactone polyol C-2: OD-X-2721 (trade name, manufactured by DIC Corporation, polycaprolactone polyol, number-average molecular weight (Mn): 1,000, average number of functional hydroxyl groups: 2.0).

Polyester polyol C-3: OD-X-2693 (trade name, manufactured by DIC Corporation, polyester polyol containing adipic acid units, number-average molecular weight (Mn): 3,000, average number of functional hydroxyl groups: 2.0).

Polyester polyol C-4: A synthetic product described in Synthesis Example 8 below (sebacic acid unit-containing polyester polyol, number-average molecular weight: 2,000, average number of hydroxyl groups: 2.0).

Polyester polyol C-5: OD-X-2694 (trade name, manufactured by DIC Corporation, polyester polyol containing adipic acid units, number-average molecular weight (Mn): 4,000, average number of functional hydroxyl groups: 2.0).

Polyester polyol C-6: A synthetic product described in Synthesis Example 9 described below (polyester polyol containing dodecanedioic acid units, number-average molecular weight: 2,000, average number of functional hydroxyl groups: 2.0).

Polycaprolactone polyol C-7: OD-X-2722 (trade name, manufactured by DIC Corporation, polycaprolactone polyol, number-average molecular weight (Mn): 2,000, average number of functional hydroxyl groups: 2.0).

The following materials were used as the hydrophilic component (D).

Nonionic hydrophilic component D-1: MPG-081 (trade name, manufactured by Nippon Nyukazai Co., Ltd., methoxypolyethylene glycol, number of ethylene oxide repeating units: 16.0).

<Synthesis of isocyanate prepolymer>

[Synthesis Example 1]

The inside of a four-neck flask equipped with a stirrer, a thermometer, and a cooling tube was replaced with nitrogen, and 1,000 g of HDI and 77.5 g of 2-ethylhexanol as (B) were charged, and a urethane-forming reaction was carried out at 90°C for 1 hour while stirring. Then, after raising the temperature to 130°C, 0.3 g of 2-ethylhexanoate ZrO was added as an allophanate formation catalyst, and the reaction was carried out for about 2 hours. Then, 2.8 g of a 10% 2-ethylhexanol solution of phosphoric acid (105%) was added, and the reaction was stopped by post-treatment at 130°C for 1 hour. After filtering the reaction solution, unreacted HDI was removed using a thin-film evaporator, and an isocyanate prepolymer P-1 having an allophanate group was obtained. The NCO content of the obtained isocyanate prepolymer P-1 was 17.2 %, and the average number of functional groups was 2.0.

[Synthesis Example 2]

A four-neck flask equipped with a stirrer, a thermometer, a reflux condenser, a nitrogen blowing tube, and a dropping funnel was conditioned with a nitrogen atmosphere, 1,000 g of HDI and 337 g of polycaprolactone polyol CB-1 were charged, and the temperature inside the reactor was maintained at 95°C for 90 minutes while stirring to carry out a urethane-forming reaction. The reaction solution was filtered, and then unreacted HDI was removed using a thin-film evaporator to obtain an isocyanate prepolymer P-2. The resulting isocyanate prepolymer P-2 had an NCO content of 9.0% by mass and an average number of functional groups of 3.3.

[Synthesis Example 3]

A four-neck flask equipped with a stirrer, a thermometer, a reflux condenser, a nitrogen blowing tube, and a dropping funnel was conditioned with a nitrogen atmosphere, 1,100 g of HDI and 500 g of the polyester polyol C-1 were charged, and the temperature inside the reactor was maintained at 100°C for 2 hours while stirring to carry out a urethane-forming reaction. The reaction solution was filtered, and then unreacted HDI was removed using a thin-film evaporator to obtain an isocyanate prepolymer P-3. The resulting isocyanate prepolymer P-3 had an NCO content of 6.0% by mass and an average number of functional groups of 2.2.

[Synthesis Example 4]

A four-neck flask equipped with a stirrer, a thermometer, a reflux condenser, a nitrogen blowing tube, and a dropping funnel was conditioned with a nitrogen atmosphere, 1,000 g of HDI and 100 g of 2-ethylhexanol were charged, and the temperature inside the reactor was maintained at 80°C for 60 minutes while stirring to carry out a urethane-forming reaction. Then, 0.06 g of tetramethylammonium caprylate was added as a nurate formation catalyst. After 4 hours, when the conversion rate to polyisocyanate reached 45% with respect to the isocyanate group content and refractive index measurement of the reaction solution, 0.14 g of phosphoric acid was added to stop the reaction. After filtering the reaction solution, unreacted **HDI** was removed using a thin-film evaporator to obtain an isocyanate prepolymer P-4. The NCO content of the obtained isocyanate prepolymer P-4 was 17.8% by mass, and the average number of functional groups was 2.7.

[Synthesis Example 5]

The isocyanate prepolymer P-1 obtained in Synthesis Example 1 and the isocyanate prepolymer P-4 obtained in Synthesis Example 4 were added to and mixed in the apparatus described in Synthesis Example 1 so that the mass ratio of the isocyanate prepolymer P-1 to the isocyanate prepolymer P-4 was 8/2 to obtain an isocyanate prepolymer P-5 having an allophanate group. The obtained isocyanate prepolymer P-5 was a transparent liquid with an NCO content of 17.5% and an average functionality of 2.5.

[Synthesis Example 6]

The isocyanate prepolymer P-1 obtained in Synthesis Example 1 and the isocyanate prepolymer P-4 obtained in Synthesis Example 4 were added to and mixed in the apparatus described in Synthesis Example 1 so that the mass ratio of the isocyanate prepolymer P-1 to the isocyanate prepolymer P-4 was 5/5 to obtain an isocyanate prepolymer P-6 having an allophanate group. The obtained isocyanate prepolymer P-6 was a transparent liquid with an NCO content of 17.4% and an average functionality of 2.3.

[Synthesis Example 7]

A four-neck flask equipped with a stirrer, a thermometer, a reflux condenser, a nitrogen blowing tube, and a dropping funnel was conditioned with a nitrogen atmosphere, 1,100 g of HDI and 500 g of the polyester polyol C-1 were charged, and the temperature inside the reactor was maintained at 100°C for 2 hours while stirring to carry out a urethane-forming reaction. Thereafter, the temperature inside the reactor was maintained at 140° C for 4 hours while stirring to carry out allophanate-forming reaction. The reaction solution was filtered, and then unreacted HDI was removed using a thin-film evaporator to obtain an isocyanate prepolymer P-7. The resulting isocyanate prepolymer P-7 had an NCO content of 5.4% by mass and an average number of functional groups of 2.2.

<Synthesis of polyester polyol>

[Synthesis Example 8]

A flask equipped with a stirring rod, a temperature sensor, and a rectifying tube was charged with 100 g of 1,3-butylene glycol, 150 g of 1,6-hexanediol, 160 g of 2-ethyl-1,3-hexanediol, and 600 g of sebacic acid (carbon number: 8), and an esterification reaction was carried out by heating to 180°C or higher and 210°C or lower while stirring and introducing dry nitrogen into the flask. The reaction was stopped when the acid value became 0.5 mgKOH/g or lower, and the polyester polyol C-4 having a number-average molecular weight (Mn) of 2,000, a hydroxyl value of 60 mgKOH/g, and an average functionality of hydroxyl groups of 2.0 was obtained.

[Synthesis Example 9]

A flask equipped with a stirring rod, a temperature sensor, and a rectifying tube was charged with 100 g of 1,3-butylene glycol, 140 g of 1,6-hexanediol, 150 g of 2-ethyl-1,3-hexanediol, and 650 g of dodecanedioic acid (carbon number: 10), and an esterification reaction was carried out by heating to 180°C or higher and 210°C or lower while stirring and introducing dry nitrogen into the flask. The reaction was stopped when the acid value became 0.5 mgKOH/g or lower, and the polyester polyol C-6 having a number-average molecular weight (Mn) of 2,000, a hydroxyl value of 60 mgKOH/g, and an average functionality of hydroxyl groups of 2.0 was obtained.

<Production of polyisocyanate composition>

[Example 1]

Into the apparatus described in Synthesis Example 1, 39 g of the isocyanate prepolymer P-1 obtained in Synthesis Example 1, 60 g of the polyester polyol C-1, and 1 g of the nonionic hydrophilic component D-1 were added and mixed, and a urethane-forming reaction was carried out at 90°C for 4 hours, thereby obtaining a polyisocyanate composition PA-1.

[Example 2]

Into the apparatus described in Synthesis Example 1, 39 g of the isocyanate prepolymer P-1 obtained in Synthesis Example 1, 60 g of the polyester polyol C-2, and 1 g of the nonionic hydrophilic component D-1 were added and mixed, and a urethane-forming reaction was carried out at 90°C for 4 hours, thereby obtaining a polyisocyanate composition PA-2.

[Example 3]

Into the apparatus described in Synthesis Example 1, 44 g of the isocyanate prepolymer P-1 obtained in Synthesis Example 1, 55 g of the polyester polyol C-1, and 1 g of the nonionic hydrophilic component D-1 were added and mixed, and a urethane-forming reaction was carried out at 90°C for 4 hours, thereby obtaining a polyisocyanate composition PA-3.

[Example 4]

Into the apparatus described in Synthesis Example 1, 19 g of the isocyanate prepolymer P-1 obtained in Synthesis Example 1, 80 g of the polyester polyol C-3, and 1 g of the nonionic hydrophilic component D-1 were added and mixed, and a urethane-forming reaction was carried out at 90°C for 4 hours, thereby obtaining a polyisocyanate composition PA-4.

[Example 5]

Into the apparatus described in Synthesis Example 1, 33 g of the isocyanate prepolymer P-1 obtained in Synthesis Example 1, 63 g of the polyester polyol C-1, and 5 g of the nonionic hydrophilic component D-1 were added and mixed, and a urethane-forming reaction was carried out at 90°C for 4 hours, thereby obtaining a polyisocyanate composition PA-5.

[Example 6]

Into the apparatus described in Synthesis Example 1, 39 g of the isocyanate prepolymer P-1 obtained in Synthesis Example 1, 60 g of the polyester polyol C-4, and 1 g of the nonionic hydrophilic component D-1 were added and mixed, and a urethane-forming reaction was carried out at 90°C for 4 hours, thereby obtaining a polyisocyanate composition PA-6.

[Example 7]

Into the apparatus described in Synthesis Example 1, 39 g of the isocyanate prepolymer P-5 obtained in Synthesis Example 5, 60 g of the polyester polyol C-4, and 1 g of the nonionic hydrophilic component D-1 were added and mixed, and a urethane-forming reaction was carried out at 90°C for 4 hours, thereby obtaining a polyisocyanate composition PA-7.

[Example 8]

Into the apparatus described in Synthesis Example 1, 39 g of the isocyanate prepolymer P-6 obtained in Synthesis Example 6, 60 g of the polyester polyol C-4, and 1 g of the nonionic hydrophilic component D-1 were added and mixed, and a urethane-forming reaction was carried out at 90°C for 4 hours, thereby obtaining a polyisocyanate composition PA-8.

[Example 9]

Into the apparatus described in Synthesis Example 1, 99 g of the isocyanate prepolymer P-7 obtained in Synthesis Example 7, 76 g of the polyester polyol C-1, and 1 g of the nonionic hydrophilic component D-1 were added and mixed, and a urethane-forming reaction was carried out at 90°C for 4 hours, thereby obtaining a polyisocyanate composition PA-9.

[Comparative Example 1]

Into the apparatus described in Synthesis Example 1, 49 g of the isocyanate prepolymer P-1 obtained in Synthesis Example 1, 50 g of the polyester polyol C-2, and 1 g of the nonionic hydrophilic component D-1 were added and mixed, and a urethane-forming reaction was carried out at 90°C for 4 hours, thereby obtaining a polyisocyanate composition PB-1.

[Comparative Example 2]

Into the apparatus described in Synthesis Example 1, 13 g of the isocyanate prepolymer P-1 obtained in Synthesis Example 1, 86 g of the polyester polyol C-5, and 1 g of the nonionic hydrophilic component D-1 were added and mixed, and a urethane-forming reaction was carried out at 90°C for 4 hours, thereby obtaining a polyisocyanate composition PB-2.

[Comparative Example 3]

Into the apparatus described in Synthesis Example 1, 36 g of the isocyanate prepolymer P-1 obtained in Synthesis Example 1, 63 g of the polyester polyol C-2, and 1 g of the nonionic hydrophilic component D-1 were added and mixed, and a urethane-forming reaction was carried out at 90°C for 4 hours, thereby obtaining a polyisocyanate composition PB-3.

[Comparative Example 4]

Into the apparatus described in Synthesis Example 1, 99 g of the isocyanate prepolymer P-2 obtained in Synthesis Example 2 and 1 g of the nonionic hydrophilic component D-1 were added and mixed, and a urethane-forming reaction was carried out at 90°C for 4 hours, thereby obtaining a polyisocyanate composition PB-4.

[Comparative Example 5]

Into the apparatus described in Synthesis Example 1, 39 g of the isocyanate prepolymer P-1 obtained in Synthesis Example 1, 60 g of the polyester polyol C-6, and 1 g of the nonionic hydrophilic component D-1 were added and mixed, and a urethane-forming reaction was carried out at 90°C for 4 hours, thereby obtaining a polyisocyanate composition PB-4.

[Comparative Example 6]

The isocyanate prepolymer P-3 obtained in Synthesis Example 3 was used as a polyisocyanate composition PB-6.

[Comparative Example 7]

Into the apparatus described in Synthesis Example 1, 40 g of the isocyanate prepolymer P-1 obtained in Synthesis Example 1 and 60 g of the polyester polyol C-2 were added and mixed, and a urethane-forming reaction was carried out at 90°C for 4 hours, thereby obtaining a polyisocyanate composition PB-7.

[Comparative Example 8]

Into the apparatus described in Synthesis Example 1, 38 g of the isocyanate prepolymer P-1 obtained in Synthesis Example 1 and 62 g of the polyester polyol C-7 were added and mixed, and a urethane-forming reaction was carried out at 90°C for 4 hours, thereby obtaining a polyisocyanate composition PB-8.

[Comparative Example 9]

Into the apparatus described in Synthesis Example 1, 39 g of the isocyanate prepolymer P-4 obtained in Synthesis Example 4, 60 g of the polyester polyol C-2, and 1 g of the nonionic hydrophilic component D-1 were added and mixed, and a urethane-forming reaction was carried out at 90°C for 4 hours, thereby obtaining a polyisocyanate composition PB-9.

The physical properties and evaluation results of the obtained polyisocyanate compositions PA-1 to 9 and PB-1 to 9 are shown in Tables 1 and 2, respectively.

[Table 1]

| | | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Composition | Polyisocyanate composition | | | PA-1 | PA-2 | PA-3 | PA-4 | PA-5 | PA-6 | PA-7 | PA-8 | PA-9 |
| | | Isocyanate prepolymer | Type | P-1 | P-1 | P-1 | P-1 | P-1 | P-1 | P-5 | P-6 | P-7 |
| | | | Mixing ratio (mass%) | 39 | 39 | 44 | 19 | 33 | 39 | 39 | 39 | 99 |
| | | (C): Polyester polyol or polycaprolactone polyol | Type | C-1 | C-2 | C-1 | C-3 | C-1 | C-4 | C-4 | C-4 | C-1 |
| | | | Carbon number of dicarboxylic acid | 2 | - | 2 | 4 | 2 | 8 | 8 | 8 | 2 |
| | | | Mixing ratio (mass%) | 60 | 60 | 55 | 80 | 63 | 60 | 60 | 60 | 76 |
| | | (D): Hydrophilic component | Mixing ratio (mass%) | 1 | 1 | 1 | 1 | 5 | 1 | 1 | 1 | 1 |
| | | Presence or absence of allophanate groups | | Yes | Yes | Yes | Yes | Yes | Yes | Yes | Yes | Yes |
| Property | Isocyanate group content (mass%) | | | 2.5 | 2.6 | 3.8 | 1.0 | 1.1 | 4.1 | 3.2 | 3.1 | 5.4 |
| | Average number of isocyanate functional groups | | | 2.0 | 2.0 | 1.9 | 1.9 | 1.8 | 1.9 | 3.1 | 2.5 | 2.2 |
| Evaluation | Biodegradability | | | A | A | B | A | A | A | B | A | B |
| | Mechanical property | | | A | A | A | B | B | B | A | A | A |

[Table 2]

| | | | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 |
|---|---|---|---|---|---|---|---|---|---|---|---|
| Composition | Polyisocyanate composition | | PB-1 | PB-2 | PB-3 | PB-4 | PB-5 | PB-6 | PB-7 | PB-8 | PB-9 |
| | Isocyanate prepolymer | Type | P-1 | P-1 | P-1 | P-2 | P-1 | P-3 | P-1 | P-1 | P-4 |
| | | Mixing ratio (mass%) | 49 | 13 | 36 | 99 | 39 | 100 | 40 | 71 | 39 |
| | (C): Polyester polyol or polycaprolactone polyol | Type | C-2 | C-5 | C-2 | CB-1 | C-6 | C-1 | C-2 | C-7 | C-2 |
| | | Carbon number of dicarboxylic acid | - | 4 | - | - | 10 | 2 | - | - | - |
| | | Mixing ratio (mass%) | 50 | 86 | 63 | 60 | 60 | 77 | 60 | 29 | 60 |
| | (D): Hydrophilic component | Mixing ratio (mass%) | 1 | 1 | 1 | 1 | 1 | 0 | 0 | 0 | 1 |
| | Presence or absence of allophanate groups | | Yes | Yes | Yes | No | Yes | No | Yes | No | Yes |
| Property | Isocyanate group content (mass%) | | 4.1 | 0.4 | 0.9 | 7.5 | 4.1 | 6.0 | 1.9 | 11.2 | 2.7 |
| | Average number of isocyanate functional groups | | 1.9 | 1.9 | 1.4 | 3.3 | 1.9 | 2.2 | 1.4 | 2.0 | 3.4 |
| Evaluation | Biodegradability | | C | C | A | C | A | C | C | C | C |
| | Mechanical property | | A | A | C | A | C | A | A | A | A |

**EP 4 653 481 A1**

As shown in Table 1 above, the polyisocyanate compositions PA-1 to 9 (Examples 1 to 9) of the present embodiment were evaluated as A or B in terms of biodegradability and mechanical property, and it was confirmed that the compositions had excellent biodegradability and mechanical property when formed into a coating film.

On the other hand, as shown in Table 2 above, the polyisocyanate composition PB-1 (Comparative Example 1), in which the content of polyester polyol relative to the total mass of the polyisocyanate composition was 50% by mass or less, was evaluated as C in terms of biodegradability when formed into a coating film, indicating poor performance.

As shown in Table 2 above, the polyisocyanate composition PB-2 (Comparative Example 2), in which the content of polyester polyol relative to the total mass of the polyisocyanate composition was 86% by mass, was evaluated as C in terms of mechanical property when formed into a coating film, indicating poor performance.

As shown in Table 2 above, the polyisocyanate composition PB-3 (Comparative Example 3), in which the average number of isocyanate functional groups in the polyisocyanate composition was 1.4, was evaluated as C in terms of mechanical property when formed into a coating film, indicating poor performance.

As shown in Table 2 above, the polyisocyanate composition PB-4 (Comparative Example 4), in which the average number of isocyanate functional groups in the polyisocyanate composition was 3.3, and the polyisocyanate composition PB-9 (Comparative Example 9), in which the average number of isocyanate functional groups in the polyisocyanate composition was 3.4, were evaluated as C in terms of biodegradability when formed into a coating film, indicating poor performance.

As shown in Table 2 above, the polyisocyanate composition PB-5 (Comparative Example 5), in which the dicarboxylic acid unit of the polyester polyol had 10 carbon atoms, was evaluated as C in terms of mechanical property when formed into a coating film, indicating poor performance.

As shown in Table 2 above, the polyisocyanate compositions PB-6, 7, and 8 (Comparative Examples 6, 7, and 8), which do not contain a hydrophilic component, were evaluated as C in terms of biodegradability when formed into coating films, indicating poor performance.

As shown in Table 2 above, the polyisocyanate compositions PB-4, PB-6, and PB-8 (Comparative Examples 4, 6, and 8), which do not contain allophanate groups, were evaluated as C in terms of biodegradability when formed into coating films, indicating poor performance.

Furthermore, as shown in Table 1 above, the polyisocyanate compositions PA-1 and 2 (Examples 1 and 2), in which the content of polyester polyol relative to the total mass of the polyisocyanate composition was 60% by mass, tended to have improved biodegradability when formed into a coating film, compared with the polyisocyanate composition PA-3 (Example 3), in which the content of polyester polyol relative to the total mass of the polyisocyanate composition was 55% by mass.

As shown in Table 1 above, the polyisocyanate compositions PA-1 and 2 (Examples 1 and 2), in which the content of polyester polyol relative to the total mass of the polyisocyanate composition was 60% by mass, tended to have improved mechanical property when formed into a coating film, compared with the polyisocyanate composition PA-4 (Example 4), in which the content of polyester polyol relative to the total mass of the polyisocyanate composition was 80% by mass.

As shown in Table 1 above, the polyisocyanate compositions PA-1 and 2 (Examples 1 and 2), in which the average number of isocyanate functional groups in the polyisocyanate composition was 2.0, tended to have improved mechanical property when formed into a coating film, compared with the polyisocyanate composition PA-5 (Example 5), in which the average number of isocyanate functional groups in the polyisocyanate composition was 1.8.

As shown in Table 1 above, the polyisocyanate compositions PA -1 and PA-2 (Examples 1 and 2), in which the average number of isocyanate functional groups in the polyisocyanate composition was 2.0, tended to have improved biodegradability when formed into a coating film, compared with the polyisocyanate composition PA-7 (Example 7), in which the average number of isocyanate functional groups in the polyisocyanate composition was 3.1.

As shown in Table 1 above, the polyisocyanate composition PA-1 (Example 1), in which the dicarboxylic acid unit of the polyester polyol had 2 carbon atoms, tended to have improved mechanical property when formed into a coating film, compared with the polyisocyanate composition PA-6 (Example 6), in which the dicarboxylic acid unit of the polyester polyol had 8 carbon atoms.

INDUSTRIAL APPLICABILITY

The polyisocyanate composition of the present invention is useful as a polyisocyanate composition that exhibits excellent biodegradability and mechanical property when formed into a coating film.

**Claims**

1. A polyisocyanate composition comprising a polyisocyanate having an allophanate group, wherein

the polyisocyanate is derived from (A), (C), and (D),

said (A) is at least one diisocyanate selected from the group consisting of aliphatic diisocyanates and alicyclic diisocyanates,

said (C) is a polyester polyol or a polycaprolactone polyol, has a number-average molecular weight (Mn) of 500 or more and 4,000 or less, and is bifunctional or trifunctional,

said (D) is a hydrophilic component,

an average isocyanate functionality of the polyisocyanate composition is 1.8 or more and 3.2 or less,

the polyester polyol is composed of a polyol unit and a dicarboxylic acid unit that has 8 or fewer carbon atoms,

a content of said (C) relative to a total mass of the polyisocyanate composition is more than 50% by mass and 85% by mass or less, and

a content of said (D) relative to a total mass of the polyisocyanate composition is 0.1% by mass or more and 20% by mass or less.

2. The polyisocyanate composition according to claim 1, wherein

the polyisocyanate is derived from (B) in addition to said (A), said (C), and said (D), and

said (B) is an alcohol having 1 to 20 carbon atoms.

3. The polyisocyanate composition according to claim 1 or 2, wherein a content of isocyanate groups relative to a total mass of the polyisocyanate composition is 1% by mass or more and 13% by mass or less.

4. The polyisocyanate composition according to claim 1 or 2, wherein a number-average molecular weight (Mn) of said (C) is 1,000 or more and 4,000 or less.

5. The polyisocyanate composition according to claim 1 or 2, wherein the polyol unit constituting the polyester polyol is an aliphatic polyol.

6. The polyisocyanate composition according to claim 1 or 2, wherein the dicarboxylic acid unit is succinic acid or adipic acid.

7. The polyisocyanate composition according to claim 5, wherein the aliphatic polyol is diethylene glycol or triethylene glycol.

8. The polyisocyanate composition according to claim 1 or 2, wherein said (D) is a nonionic hydrophilic component having one hydroxyl group and having 3 to 25 ethylene oxide repeating units.

9. The polyisocyanate composition according to claim 2, wherein said (B) is 2-ethylhexanol.

10. The polyisocyanate composition according to claim 1 or 2, which is a curing agent for a coating composition or a polyurethane bead composition.

11. A mixture comprising the polyisocyanate composition according to claim 1 or 2.

12. A coating composition comprising a polyol and a curing agent, wherein the polyisocyanate composition according to claim 1 or 2 is contained as the curing agent.

13. A coating film obtained by curing the coating composition according to claim 12.

14. A biodegradable polyurethane cured product obtained by curing the polyisocyanate composition according to claim 1 or 2 alone or together with an acrylic polyol.

**Europäisches Patentamt**
**European Patent Office**
**Office européen des brevets**

# EUROPEAN SEARCH REPORT

Application Number

EP 25 17 6692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 517 559 A1 (ASAHI CHEMICAL IND [JP]) 31 July 2019 (2019-07-31) <br> * paragraphs [0001], [0011], [0033], [0034], [0170] - [0182] * <br> * paragraphs [0293], [0300] - [0312]; examples 19-42; tables 4-8 * <br> ----- | 1-14 | INV. <br> C08G18/09 <br> C08G18/10 <br> C08G18/18 <br> C08G18/22 <br> C08G18/28 <br> C08G18/42 <br> C08G18/73 <br> C08G18/78 <br> C08G18/79 <br> C09D175/04 <br> C09D175/06 |
| A,D | JP 5 263644 B2 (KAWASAKI KASEI CHEMICALS) 14 August 2013 (2013-08-14) <br> * the whole document * <br> ----- | 1-14 | |

TECHNICAL FIELDS
SEARCHED (IPC)

C08G
C09D

The present search report has been drawn up for all claims

| Place of search | Date of completion of the search | Examiner |
|---|---|---|
| Munich | 16 September 2025 | Neugebauer, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 6692

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | | Publication date | Patent family member(s) | | Publication date |
|---|---|---|---|---|---|
| EP 3517559 | A1 | 31-07-2019 | CN | 109790277 A | 21-05-2019 |
| | | | EP | 3517559 A1 | 31-07-2019 |
| | | | JP | 6633218 B2 | 22-01-2020 |
| | | | JP | WO2018056408 A1 | 11-04-2019 |
| | | | WO | 2018056408 A1 | 29-03-2018 |
| JP 5263644 | B2 | 14-08-2013 | JP | 5263644 B2 | 14-08-2013 |
| | | | JP | 2009096824 A | 07-05-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5263644 B
- JP S5734107 A
- JP S61275311 A
- JP H1261409 A
- JP H3006273 A